# EUROPÄISCHE PATENTSCHRIFT

(11) **EP 1 736 370 B1**
(45) Veröffentlichungstag und Bekanntmachung des Hinweises auf die Patenterteilung: **14.11.2007**
(21) Anmeldenummer: 06012368.4
(22) Anmeldetag: 16.06.2006
(51) Int. Cl.: B60R 21/13, B60R 9/06

(54) **Cabrioletfahrzeug mit Überrollbügel**
Convertible vehicle with roll-over bar
Véhicule convertible avec arceau de protection

(30) Priorität: 22.06.2005 DE 102005028782
(43) Veröffentlichungstag der Anmeldung: 27.12.2006
(73) Patentinhaber: Wilhelm Karmann GmbH, 49084 Osnabrück (DE)
(72) Erfinder: Bunsmann, Winfried, 49143 Bissendorf (DE)

(56) Entgegenhaltungen:
- EP-B1- 0 844 124
- DE-B3- 10 324 660
- DE-C1- 4 438 190
- US-A- 4 978 161

## Beschreibung

Die Erfindung betriff ein Cabrioletfahrzeug mit einer einen Fahrzeuginnenraum umgebenden Fahrzeugstruktur, an der ein sich quer über den Fahrzeuginnenraum erstreckender Überrollbügel befestigbar ist. Ein solches Cabrioletfahrzeug ist aus der US-A-4 978 161 bekannt.

Moderne Cabrioletfahrzeuge sind mit einem Überrollbügel ausgerüstet, der insbesondere bei offenem Verdeck die Fahrzeuginsassen im Falle eines Überschlags schützt. Ein solcher Überrollbügel ist beispielsweise, insbesondere wenn es sich um ein zweisitziges Cabrioletfahrzeug handelt, starr mit den hinter den Türöffnungen befindlichen B-Säulen der Fahrzeugstruktur verbunden. Es können auch einzelne, hinter den Sitzen angeordnete Überrollbügel vorgesehen sein, die normalerweise versenkt sind und im Falle eines Überschlags nach oben ausfahren oder hochklappen.

Aus der EP 08 44 124 B1 ist ein Cabrioletfahrzeug mit einem zweiteiligen Verdeck bekannt, in dessen hinteres Verdeckteil ein Überrollbügel integriert ist, der sich im geschlossenen Zustand des Verdecks in fahrzeugfesten Konsolen abstützt.

Aus der DE 103 24 660 B3 ist ein viersitziges Cabrioletfahrzeug bekannt, in dessen Rücksitzbereich eine in Fahrzeuglängsrichtung verstellbare Überrollschutzeinrichtung vorgesehen ist. Die einen Überrollbügel enthaltende Überrollschutzeinrichtung ist derart beweglich mit einem karosseriefesten Bauteil verbunden, dass der Überrollbügel bei aufrechter Lehne des Rücksitzes über an der Rücksitzlehne angeordnete Kopfstützen vorragt und bei zusammengeklapptem Rücksitz in eine Stellung bewegt ist, in der er unmittelbar hinter den Vordersitzen angeordnet ist und deren Kopfstützen überragt. Der zur Bewegung des Überrollbügels vorgesehene Mechanismus ist verhältnismäßig kompliziert und muss wegen der hohen Kräfte, die auf den Überrollbügel wirken, sehr stabil ausgeführt sein.

Der Erfindung liegt die Aufgabe zugrunde, ein Cabrioletfahrzeug zu schaffen, dessen Überrollbügel bei einfachem Aufbau in unterschiedlichen Positionen befestigbar ist.

Diese Aufgabe wird mit einem Cabrioletfahrzeug gemäß dem Anspruch 1 gelöst.

Die Fahrzeugstruktur des erfindungsgemäßen Cabrioletfahrzeugs weist mehrere, in Fahrzeuglängsrichtung beabstandete Aufnahmekonsolenpaare auf, an denen der Überrollbügel entriegelbar angebracht werden kann.

Die Unteransprüche sind auf vorteilhafte Ausführungsformen und Weiterbildungen des erfindungsgemäßen Cabrioletfahrzeugs gerichtet.

Insgesamt wird mit der Erfindung eine einfache Möglichkeit geschaffen, die Insassen eines Cabrioletfahrzeugs, egal ob zwei- oder viersitzig, im Falle eines Überschlags vor Verletzungen zu schützen, wobei der Überrollbügel vorteilhafterweise auch als Bestandteil eines Gepäckträgersystems verwendbar ist.

Die Erfindung wird im Folgenden anhand schematischer Zeichnungen beispielsweise und in weiteren Einzelheiten erläutert.

In den Figuren stellen dar:
- Fig. 1: eine Seitenansicht der Karosserie eines Cabrioletfahrzeugs,
- Fig. 2: drei verschiedene Perspektivansichten auf Ausschnitte einer Cabrioletfahrzeugkarosserie bei abgenommenem Verdeck,
- Fig. 3: zwei Perspektivansichten auf Teile eines Cabrioletfahrzeugs bei geschlossenem Verdeck,
- Fig. 4: eine Schnittansicht einer Aufnahmekonsole mit eingesetztem Überrollbügel und
- Fig. 5: eine Schnittansicht einer abgeänderten Ausführungsform einer Aufnahmekonsole mit darin aufgenommenem Überrollbügel.

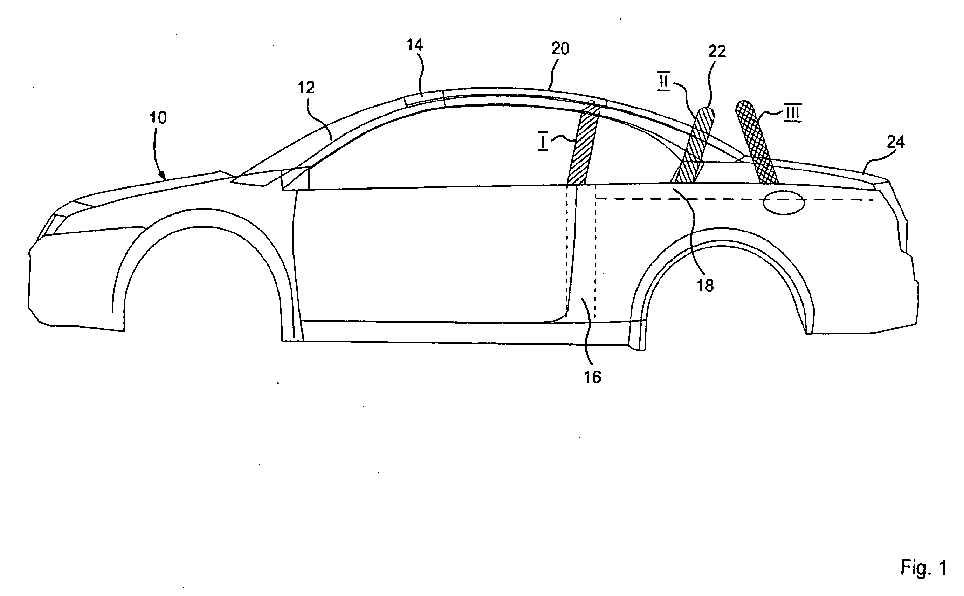

Gemäß Fig. 1 weist ein Cabrioletfahrzeug eine Karosserie 10 mit einer Fahrzeugstruktur auf, die teilweise durch die Karosserieteile selbst gebildet ist und teilweise zur Halterung der Außenhautteile dient. Die Fahrzeugstruktur liefert die Festigkeit und Steifigkeit der Karosserie. Zur Fahrzeugstruktur gehören insbesondere ein Windschutzscheibenrahmen 12 mit einem hinteren Querträger 14, eine biegesteife Unterstruktur, B-Säulen 16, die den Ausschnitt der Vordertüre nach hinten begrenzen, und obere seitliche Längsholme 18, die der Karosserie seitlich hinter den Türen Steifigkeit verleihen.

Ein klapp- oder faltbares Verdeck 20 ist üblicherweise über Hauptlager an der Fahrzeugstruktur im Bereich der Längsholme 18 befestigt.

Aufbau und Funktion des Verdecks eines Cabrioletfahrzeugs sind allgemein bekannt und werden daher nicht erläutert.

Gemäß Fig. 1 ist ein über die Breite des Fahrzeugs reichender Überrollbügel 22 in drei unterschiedlichen Stellungen an der Fahrzeugstruktur befestigbar. In einer vordersten Stellung I ist der Überrollbügel an der Fahrzeugstruktur in Aufnahmekonsolen befestigt, die an den B-Säulen 16 vorgesehen sind. Der Überrollbügel kann sich in der Stellung I befinden und schützt somit bei geschlossenem und offenem Verdeck zumindest die angeschnallten Passagiere der Vordersitze davor, dass der Kopfraum im Falle eines Überschlags unzulässig weit eingeschränkt wird. Der Überrollbügel 22 und der Windschutzscheibenrahmen 12 mit dem Querträger 14 sind derart ausgelegt, dass sie das Gewicht des sich überschlagenden Fahrzeugs aufnehmen können.

In der Stellung II der Rücklehnen der Fondsitze (falls vorhanden) ist der Überrollbügel 22 an der Fahrzeugstruktur beispielsweise im Bereich der Hauptlager des Verdecks befestigt. In dieser Stellung II kann der Überrollbügel 22 bei dem dargestellten Verdeck nur dann bei geschlossenem Verdeck verwendet werden, wenn die fahrzeugstrukturfesten Aufnahmekonsolen für den Überrollbügel 22 sich bei geschlossenem Verdeck außerhalb des Verdecks befinden. Ist dies nicht der Fall, so kann der Überrollbügel 22 nur bei offenem Verdeck in der Stellung II verwendet werden und schützt dann zuverlässig auch auf hinteren Sitzen angeschnallt sitzende Personen, wobei gleichzeitig die Abstützbasis des sich überschlagenden Fahrzeugs durch den größeren Abstand zwischen den Windschutzscheibenrahmenquerträger 14 und dem Überrollbügel 22 verlängert ist.

In der Stellung III, in der der Überrollbügel 22 an den Längsholmen 18 im Bereich hinter dem Verdeck 20 befestigt ist, sichert der Überrollbügel 22 nicht nur im Falle eines Überschlags ausreichenden Kopfraum, sondern kann auch als Bestandteil eines Gepäckträgersystems genutzt werden, zu dem beispielsweise ein weiterer am Windschutzscheibenrahmen 12 angebrachter Träger und/oder ein im hinteren Bereich einer Gepäckraumklappe 24 angebrachter Träger (nicht dargestellt) gehört. Das Gepäckträgersystem kann auch zwei Überrollbügel 22 enthalten, die beispielsweise in den Stellungen I und III oder lediglich I und II sind. Auch in der Stellung III bietet der Überrollbügel bei einem Überschlag einen Schlitz für angeschnallte Personen.

Wenn in der Karosserieaußenhaut Öffnungen zum Einführen der Enden des Überrollbügels 22 in entsprechende Aufnahmekonsolen vorgesehen sind, sind diese Öffnungen vorteilhafterweise durch Klappen verschlossen, die nach innen öffnen und in Schließstellung elastisch vorgespannt sind.

Vorteilhafterweise sind die Aufnahmekonsolenpaare, die je eine an jeder Seite des Fahrzeugs angebrachte, sich entsprechende Aufnahmekonsole enthalten, derart angeordnet, dass ein identischer Überrollbügel 22 in den drei Stellungen I, II und III an der Fahrzeugstruktur befestigt werden kann. Wenn der seitliche Abstand zwischen den Aufnahmekonsolen eines Aufnahmekonsolenpaares unterschiedlich ist, müssen unterschiedliche Überrollbügel, je nach erwünschter Stellung, verwendet werden. Die Verwendung unterschiedlicher Überrollbügel 22 bei unterschiedlichen seitlichen Abständen der Aufnahmekonsolenpaare kann dadurch vermieden werden, dass der Überrollbügel 22 aus zwei Teilen besteht, die im Bereich des mittleren, etwa waagrecht verlaufenden Teils teleskopisch ineinander gesteckt sind, so dass der Abstand zwischen den Enden des Überrollbügels 22 veränderbar ist. Eine Abstandsveränderung zwischen den Enden des Überrollbügels ist auch durch andere Maßnahmen, wie gekröpfte Ausbildung der Enden und gelenkige Verbindung mit einem Mittelteil, usw. möglich.

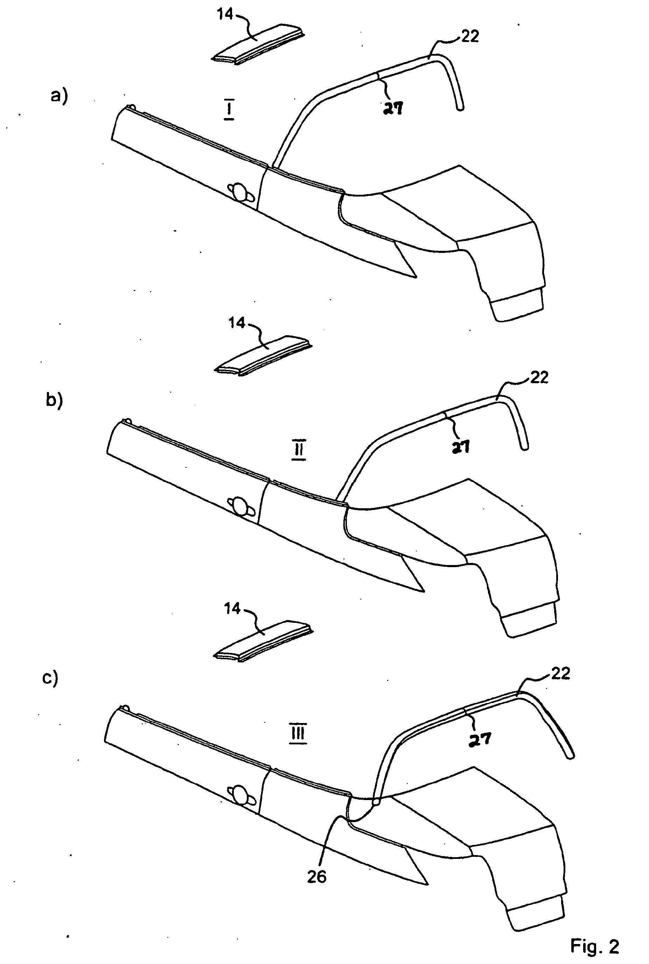

Fig. 2 zeigt die Anordnung gemäß Fig. 1 in den drei unterschiedlichen Stellungen des Überrollbügels schematisch in perspektivischer Ansicht, jeweils bei geöffnetem und im Heckbereich des Fahrzeugs verstautem Verdeck.

Gemäß Fig. 2a befindet sich der Überrollbügel 22 in seiner Stellung I; gemäß Fig. 2b befindet sich der Überrollbügel 22 in der Stellung II, wobei sich die Aufnahmekonsolen in dem dargestellten Beispiel innerhalb der Fahrzeuggürtellinie, d. h. im Fahrzeuginnenraum befinden. Fig. 2c zeigt den Überrollbügel 22 in der Stellung III. Karosserieöffnungen 26, durch die hindurch der Überrollbügel 22 in Aufnahmekonsolen befestigbar ist, sind durch Deckel (nicht dargestellt) verschlossen, die bei abgenommenem Überrollbügel bündig mit der Karosserieaußenhaut verlaufen und die vorteilhafterweise nach innen öffnen.

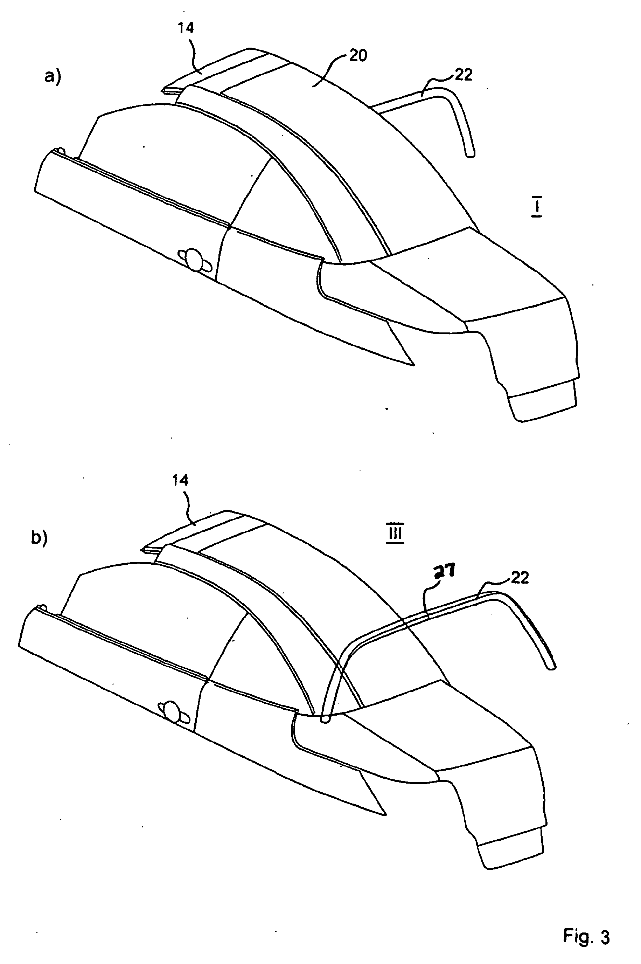

Fig. 3 zeigt den Überrollbügel in den Stellungen I und III bei geschlossenem Verdeck.

Es versteht sich, dass das Verdeck, insbesondere bei viertürigen Fahrzeugen mit komfortablem Innenraum, derart geformt sein kann, dass der Überrollbügel in Stellung II vollständig innerhalb des geschlossenen Verdecks 20 angeordnet ist.

Die der Erfindung zugrunde liegende Idee, den Überrollbügel in verschiedenen Stellungen an der Fahrzeugstruktur zu befestigen, kann für zweisitzige oder viersitzige, zweitürige oder viertürige Cabrioletfahrzeuge verwendet werden. Die mögliche teleskopische Ausbildung des Überrollbügels ist in den Figuren 2 und 3 durch eine Trennlinie 27 im waagrechten Teil des Überrollbügels angedeutet, in deren Bereich die Hälften des zweiteilig ausgebildeten Überrollbügels teleskopisch ineinander gesteckt sind.

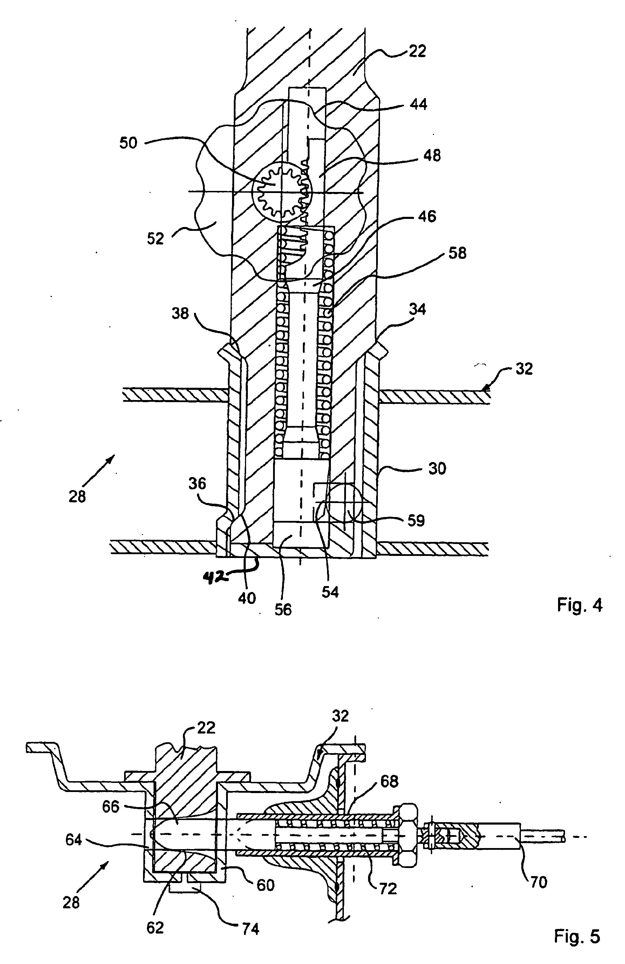

Fig. 4 zeigt ein Beispiel einer Aufnahmekonsole 28, wie sie insgesamt sechsfach an der Struktur des Cabrioletfahrzeugs gemäß Fig. 1 vorgesehen ist.

Die Aufnahmekonsole 28 besteht im Wesentlichen aus einem Rohrstück 30, das mit der insgesamt mit 32 bezeichneten Fahrzeugstruktur, beispielsweise dem B-Pfosten 16 oder dem Längsholm 18 verschweißt ist. Das Rohrstück 30 weist eine sich konisch erweiternde Einschuböffnung 34 auf und ist an seinem gegenüberliegenden Ende einseitig oder umlaufend mit einer Schrägfläche 36 ausgebildet, über die sie sich unsymmetrisch erweitert. Jedes Ende des Überrollbügels 22 (an sich gegenüberliegenden Seiten des Fahrzeugs sind jeweils sich entsprechende Aufnahmekonsolen vorgesehen) ist über eine Kegelfläche 38 konisch verjüngt und an seinem freien Ende über eine der Schrägfläche 36 entsprechende Schrägfläche 40 konisch erweitert.

Vom freien Ende des Endbereiches des Überrollbügels 22 aus führt eine mittels eines Abdeckteils 42 verschlossene, abgestufte Sackbohrung 44 einwärts, in der ein Bolzen 46 verschiebbar ist. Der Bolzen weist an seinem inneren Ende eine Verzahnung 48 auf, mit der ein Zahnrad 50 kämmt, das mittels eines an dem Bügel 22 gelagerten Handrades 52 drehbar ist.

An seinem äußeren Ende weist der Bolzen einen mit einer Schrägfläche 54 versehenen Kopf 56 auf, zwischen dem und einer Stufe der Sackbohrung 44 eine Druckfeder 58 angeordnet ist, die den Bolzen in Richtung aus dem Überrollbügel 22 heraus drängt. In einer von der Sackbohrung 44 ausgehenden seitlichen Öffnung ist ein Druckelement, beispielsweise eine Kugel 59 angeordnet.

Die Funktion der beschriebenen Anordnung entspricht der einer Anhängerkupplung, wie sie beispielsweise in der DE 697 14 939 T2 beschrieben ist. Vor dem Einschieben des Überrollbügels 22 in das Rohrstück 30 wird der Bolzen 46 durch Drehen des Handrades 52 in den Überrollbügel 22 hinein verschoben. Der Überrollbügel 22 wird dann in das Rohrstück 30 eingeschoben, bis die Kegelflächen 38 in Anlage an die Einschuböffnung 34 kommen. Anschließend wird, beispielsweise durch Entkopplung des Handrades 52 von dem Zahnrad 50, die Drehung des Zahnrades 50 freigegeben, so dass die Feder 58 den Bolzen 46 gemäß Fig. 4 nach unten verschiebt, wobei die Schrägfläche 54 des Kopfes 56 die Kugel 59 nach außen drängt, so dass die Schrägfläche 40 in Eingriff mit der Schrägfläche 36 kommt und der Bügel 22 in dem Rohrstück 30 verriegelt wird. Zum Entriegeln wird das Handrad 52 mit dem Zahnrad 50 drehfest gekoppelt, so dass der Bolzen 46 gemäß Fig. 4 nach oben bewegt werden kann, sich die Kugel 59 einwärts bewegen kann und die Schrägfläche 40 von der Schrägfläche 36 freikommt, so dass der Überrollbügel 22 aus dem Rohrstück 30 herausgezogen werden kann. Das Handrad 52 kann abnehmbar befestigt sein, was stilistisch vorteilhaft ist und einen Diebstahlschutz bildet.

Fig. 5 zeigt eine abgeänderte Ausführungsform einer Aufnahmekonsole 28. Die Aufnahmekonsole 28 weist einen mit der Fahrzeugstruktur 32 verschweißten oder einteilig ausgebildeten Aufnahmetopf 60 auf, in den der Endbereich des Überrollbügel 22 einschiebbar ist. Im in den Aufnahmetopf 60 eingeschobenen Zustand des Überrollbügel 22 fluchtet eine Querbohrung 62 des Überrollbügels 22 mit einer Querbohrung 64 des Aufnahmetopfes 60, so dass ein Sperrbolzen 66 in die Querbohrungen 62 und 64 einschiebbar ist und den Überrollbügel 22 im Aufnahmetopf 60 verriegelt. Der Sperrbolzen 66 ist in einer Hülse 68 geführt und mittels eines Bowdenzuges 70 gegen die Kraft einer Druckfeder 72 aus der Querbohrung 62 herausziehbar. Zur Betätigung des Bowdenzuges 70 kann beispielsweise ein Hydraulikzylinder oder ein Elektromotor vorgesehen sein, mit dem zentral die Sperrbolzen 66 aller Aufnahmekonsolen 28 entriegelt werden können. Die Feder 72 ist vorzugsweise so stark, dass sie bei nicht betätigtem Bowdenzug 70 den Sperrbolzen 66 in seine Verriegelungsstellung bewegt, so dass eine Verriegelung des Überrollbügels 22 gewährleistet ist.

Am Boden des Aufnahmetopfes 60 ist ein Sensor 74 vorgesehen, der den in den Aufnahmetopf 60 eingeführten Überrollbügel 22 erfasst, so dass ein entsprechendes Signal angezeigt werden kann.

Die in den Figuren 4 und 5 dargestellten Aufnahmekonsolen sind ebenso wie die in der Fig. 1 angegebenen Stellungen des Überrollbügels nur beispielhaft und können in vielfältiger Weise abgeändert werden, solange die der Erfindung zugrunde liegende Idee verwirklicht ist, Überrollbügel in unterschiedlichen Stellungen an der Fahrzeugstruktur zu befestigen und vorteilhafterweise manuell oder mittels eines Aktors zu verriegeln.

Insbesondere bei den Konstruktionen gemäß Fig. 5 ist es möglich, den Überrollbügel bei Fehlen der in Fig. 5 an dem Überrollbügel ausgebildeten Flansche und bei nach unten offener Ausbildung des Aufnahmetopfes 60 abzusenken, so dass er in einer Nichtgebrauchsstellung derart abgesenkt werden kann, dass sich der waagrechte Teil des Überrollbügels hinter den Lehnen der Vordersitze befindet. Wie aus den Figuren weiter ersichtlich, kann die Schrägstellung des oder der Überrollbügel in den verschiedenen Stellungen I, II, III sowie gegebenenfalls weiteren Stellungen unterschiedlich sein.

### BEZUGSZEICHENLISTE

- 10: Karosserie
- 12: Windschutzscheibenrahmen
- 14: Querträger
- 16: B-Säule
- 18: Längsholm
- 20: Verdeck
- 22: Überrollbügel
- 24: Gepäckraumklappe
- 26: Öffnungen
- 27: Trennlinie
- 28: Aufnahmekonsole
- 30: Rohrstück
- 32: Fahrzeugstruktur
- 34: Einschuböffnung
- 36: Schrägfläche
- 38: Kegelfläche
- 40: Schrägfläche
- 42: Abdeckteil
- 44: Sackbohrung
- 46: Bolzen
- 48: Verzahnung
- 50: Zahnrad
- 52: Handrad
- 54: Schrägfläche
- 56: Kopf
- 58: Druckfeder
- 59: Kugel
- 60: Aufnahmetopf
- 62: Querbohrung
- 64: Querbohrung
- 66: Sperrbolzen
- 68: Hülse
- 70: Bowdenzug
- 72: Feder
- 74: Sensor

## Patentansprüche

1. Cabrioletfahrzeug mit einer einen Fahrzeuginnenraum umgebenden Fahrzeugstruktur, an der ein sich quer über den Fahrzeuginnenraum erstreckender Überrollbügel (22) befestigbar ist,
**dadurch gekennzeichnet,**
**dass** die Fahrzeugstruktur (16, 18) wenigstens zwei in Fahrzeuglängsrichtung beabstandete Aufnahmekonsolenpaare (28) aufweist, deren Aufnahmekonsolen an sich entsprechenden Stellen je einer Fahrzeugseite angeordnet sind, so dass der überrollbügel (22) entriegelbar an wenigstens zwei in Fahrzeuglängsrichtung voneinander beabstandeten Stellen (I, II, III) an der Fahrzeugstruktur (16, 18) befestigbar ist.

2. Cabrioletfahrzeug nach Anspruch 1,
**dadurch gekennzeichnet,**
**dass** die Aufnahmekonsolen (28) eines Aufnahmekonsolenpaares an je einer B-Säule (16) der Fahrzeugstruktur vorgesehen sind.

3. Cabrioletfahrzeug nach Anspruch 1 oder 2,
**dadurch gekennzeichnet,**
**dass** die Aufnahmekonsolen (28) eines Aufnahmekonsolenpaars an bei geschlossenem Verdeck (20) außerhalb des Verdecks befindlichen Stellen der Fahrzeugstruktur angeordnet sind.

4. Cabrioletfahrzeug nach Anspruch 3,
**dadurch gekennzeichnet,**
**dass** die bei geschlossenem Verdeck (20) außerhalb des Verdecks angeordneten Aufnahmekonsolen (28) durch Klappen verdeckbar sind.

5. Cabrioletfahrzeug nach Anspruch 3 oder 4,
**dadurch gekennzeichnet,**
**dass** der bei geschlossenem Verdeck außerhalb des Verdecks anbringbare Überrollbügel (22) Bestandteil eines Gepäckträgersystems ist.

6. Cabrioletfahrzeug nach einem der Ansprüche 1 bis 5,
**dadurch gekennzeichnet,**
**dass** das Fahrzeug Fondsitze aufweist und die Aufnahmekonsolen (28) eines Aufnahmekonsolenpaares seitlich neben und/oder kurz hinter Rückenlehnen der Fondsitze angeordnet sind.

7. Cabrioletfahrzeug nach einem der Ansprüche 1 bis 6,
**dadurch gekennzeichnet,**
**dass** an den Endbereichen des Überrollbügels (22) je ein bewegliches Verriegelungsglied (46) vorgesehen ist, mit dem das jeweilige Ende des Überrollbügels in der jeweiligen Aufnahmekonsole (28) verriegelbar ist.

8. Cabrioletfahrzeug nach einem der Ansprüche 1 bis 7,
**dadurch gekennzeichnet,**
**dass** an der Aufnahmekonsole (28) ein bewegliches Verriegelungsglied (66) vorgesehen ist, so dass der Überrollbügel (22) in der jeweiligen Aufnahmekonsole verriegelbar ist.

9. Cabrioletfahrzeug nach einem der Ansprüche 1 bis 8,
**dadurch gekennzeichnet,**
**dass** an der Aufnahmekonsole (28) ein Sensor (74) zum Erkennen des in der Aufnahmekonsole aufgenommenen Zustandes des Überrollbügels (22) vorgesehen ist.

10. Cabrioletfahrzeug nach einem der Ansprüche 1 bis 9,
**dadurch gekennzeichnet,**
**dass** der Überrollbügel (22) teleskopisch ausgebildet ist, so dass der Abstand zwischen seinen Enden veränderbar ist.

## Claims

1. Convertible vehicle having a vehicle structure surrounding a vehicle inner compartment, on which vehicle structure a roll-over bar (22) extending transversely over the vehicle inner compartment is affixable,
**characterized in that**,
the vehicle structure (16, 18) includes at least two mounting bracket pairs (28) spaced in the vehicle longitudinal direction, whose mounting brackets are respectively disposed on each vehicle side at corresponding positions, so that the roll-over bar (22) is unlatchably affixable to the vehicle structure (16, 18) at at least two positions (I, II, III) spaced from each other in the vehicle longitudinal direction.

2. Convertible vehicle according to claim 1,
**characterized in that**,
the mounting brackets (28) of one mounting bracket pair are respectively provided on each B-pillar (16) of the vehicle structure.

3. Convertible vehicle according to claim 1 or 2,
**characterized in that**,
the mounting brackets (28) of one mounting bracket pair are disposed at positions of the vehicle structure that are disposed outside of the convertible top (20) when the convertible top is closed.

4. Convertible vehicle according to claim 3,
**characterized in that**,
the mounting brackets (28) that are disposed outside of the convertible top (20) when the convertible top is closed are coverable by lids.

5. Convertible vehicle according to claim 3 or 4,
**characterized in that**,
the roll-over bar (22), which is mountable outside the convertible top when the convertible top is closed, is a component of a luggage carrier system.

6. Convertible vehicle according to one of claims 1 to 5,
**characterized in that**,
the vehicle includes rear seats and the mounting brackets (22) of one mounting bracket pair are disposed laterally adjacent and/or close behind seat backs of the rear seats.

7. Convertible vehicle according to one of claims 1 to 6,
**characterized in that**,
a movable latching member (46) is provided at each end portion of the roll-over bar (22), with which each respective end of the roll-over bar is latchable in the respective mounting bracket (28).

8. Convertible vehicle according to one of claims 1 to 7,
**characterized in that**,
a movable latching member (66) is provided at the mounting bracket (28), so that the roll-over bar (22) is latchable in the respective mounting bracket.

9. Convertible vehicle according to of claims 1 to 8,
**characterized in that**,
a sensor (74) for detecting the state of the roll-over bar (22) accommodated in the mounting bracket (28) is provided at the mounting bracket.

10. Convertible vehicle according to one of claims 1 to 9,
**characterized in that**,
the roll-over bar (22) is telescopically formed, so that the distance between its ends is changeable.

## Revendications

1. Véhicule cabriolet comportant une structure de véhicule entourant un habitacle, sur laquelle peut être fixé un arceau de sécurité (22) s'étendant transversalement sur l'habitacle,
**caractérisé en ce que**
la structure de véhicule (16, 18) présente au moins deux paires de consoles de réception (28) espacées en direction longitudinale du véhicule, dont les consoles de réception sont agencées sur chaque côté du véhicule à des emplacements qui se correspondent, de telle sorte que l'arceau de sécurité (22) peut être fixé sur la structure de véhicule (16, 18) de manière à pouvoir être déverrouillé sur au moins deux emplacements (I, II, III) espacés les uns des autres en direction longitudinale du véhicule.

2. Véhicule cabriolet selon la revendication 1,
**caractérisé en ce que**
les consoles de réception (28) d'une paire de consoles de réception sont prévues sur un montant B (16) respectif de la structure de véhicule.

3. Véhicule cabriolet selon la revendication 1 ou 2,
**caractérisé en ce que**
lorsque la capote (20) est fermée, les consoles de réception (28) d'une paire de consoles de réception sont agencées à des emplacements de la structure du véhicule qui se trouvent en dehors de la capote.

4. Véhicule cabriolet selon la revendication 3,
**caractérisé en ce que**
les consoles de réception (28), agencées en dehors de la capote lorsque la capote (20) est fermée, peuvent être recouvertes par des volets.

5. Véhicule cabriolet selon la revendication 3 ou 4,
**caractérisé en ce que**
l'arceau de sécurité (22) qui peut être monté en dehors de la capote lorsque la capote est fermée, fait partie d'un système porte-bagages.

6. Véhicule cabriolet selon l'une des revendications 1 à 5,
**caractérisé en ce que**
le véhicule présente des sièges arrière, et les consoles de réception (28) d'une paire de consoles de réception sont agencées latéralement à côté et/ou juste derrière les dossiers des sièges arrière.

7. Véhicule cabriolet selon l'une des revendications 1 à 6,
**caractérisé en ce que**
aux zones d'extrémité de l'arceau de sécurité (22) est prévu un organe de verrouillage (46) respectif mobile, par lequel l'extrémité respective de l'arceau de sécurité peut être verrouillée dans la console de réception (28) respective.

8. Véhicule cabriolet selon l'une des revendications 1 à 7,
**caractérisé en ce que**
sur la console de réception (28) est prévu un organe de verrouillage (66) mobile, de telle sorte que l'arceau de sécurité (22) peut être verrouillé dans la console de réception respective.

9. Véhicule cabriolet selon l'une des revendications 1 à 8,
**caractérisé en ce que**
sur la console de réception (28) est prévu un capteur (74) destiné à reconnaître l'état de l'arceau de sécurité (22) reçu dans la console de réception.

10. Véhicule cabriolet selon l'une des revendications 1 à 9,
**caractérisé en ce que**
l'arceau de sécurité (22) est réalisé télescopique, de sorte que la distance entre ses extrémités est variable.
